# EUROPEAN PATENT APPLICATION

(11) **EP 4 432 417 A1**
(43) Date of publication of application: **18.09.2024**
(21) Application number: 22892863.6
(22) Date of filing: 10.11.2022
(51) Int. Cl.: H01M 10/0587, H01M 10/04, H01M 50/533, H01M 50/536

(54) **CYLINDRICAL SECONDARY BATTERY**

(30) Priority: 12.11.2021 JP 2021184735
(71) Applicant: Panasonic Energy Co., Ltd., Osaka 570-8511 (JP)
(72) Inventor: IMAOKU, Takao, Kadoma-shi, Osaka 571-0057 (JP); WAKABAYASHI, Hiromichi, Kadoma-shi, Osaka 571-0057 (JP); FUKUI, Kosuke, Kadoma-shi, Osaka 571-0057 (JP); ITO, Katsuya, Kadoma-shi, Osaka 571-0057 (JP)
(74) Representative: Eisenführ Speiser
(86) International application number: PCT/JP2022/041933
(87) International publication number: WO 2023/085365

(57) **Abstract**

A cylindrical secondary battery according to the present invention comprises a band-like core body and active material mixture layers that are formed on both surfaces of the core body, while having a wound body that is obtained by winding an electrode plate which is electrically connected to the core body by arranging a metal tab for current collection in an exposed part where the core body is exposed. The active material mixture layer is interposed between the core body and at least a part of an end of the metal tab for current collection in the width direction.

## Description

### TECHNICAL FIELD

The present disclosure relates to a cylindrical secondary battery.

### BACKGROUND ART

There is conventionally known a cylindrical secondary battery, such as a lithium ion secondary battery, comprising: an electrode group (wound assembly) having a positive electrode plate and a negative electrode plate wound via separators; and a cylindrical battery case housing the electric group and an electrolyte solution. In this secondary battery, each of the positive electrode plate and the negative electrode plate includes a core as metal foil and active material mixture layers formed on both surfaces of the core, and a lead (current collecting metal tab) is joined to an exposed portion that the core is exposed from (refer to PATENT LITERATURE 1).

### CITATION LIST

### PATENT LITERATURE

PATENT LITERATURE 1: International Publication No. WO2019/193870

### SUMMARY

### TECHNICAL PROBLEM

Although one may consider that the electrode plates are packed in high density into the inside of an exterior can in order to improve a battery capacity of the cylindrical secondary battery, this tends to cause a surface pressure exerted on the electrode plates to rise.

Although one may consider that the width and/or the thickness of the current collecting metal tab are increased in order to reduce an electric resistance of the current collecting metal tab, this tends to cause the surface pressure locally exerted on the electrode assembly to rise.

Under repetition of expansion and contraction of the electrode plates in charge-discharge cycles of the cylindrical secondary battery, the surface pressure exerted on the electrode plates rises, which increases a pressure that the core receives from a width-directional end of the metal tab. This situation causes a possibility that core foil-cutting occurs. The foil-cutting becomes a factor of the rise of an internal resistance of the secondary battery and/or the deterioration of charge-discharge performance.

It is an advantage of the present disclosure to restrain, in a cylindrical secondary battery, core foil-cutting regardless of charge-discharge repetition.

### SOLUTION TO PROBLEM

A cylindrical secondary battery according to the present disclosure is a cylindrical secondary battery, comprising a wound assembly obtained by winding an electrode plate having a belt-shaped core and active material mixture layers formed on both surfaces of the core, a current collecting metal tab being arranged in an exposed portion that the core is exposed from, the current collecting metal tab being electrically connected to the core, wherein the active material mixture layer is interposed between at least part of a width-directional end of the current collecting metal tab and the core.

### ADVANTAGEOUS EFFECTS OF INVENTION

According to the cylindrical secondary battery according to the present disclosure, the active material mixture layer is interposed between at least part of the width-directional end of the metal tab and the core. Thereby, for example, even when expansion and contraction of the electrode plate are repeated due to charge-discharge repetition and a surface pressure exerted on the electrode plate rises, a pressure that the core receives from the width-directional end of the metal tab may be restrained from rising. Therefore, core foil-cutting may be restrained regardless of charge-discharge repetition.

### BRIEF DESCRIPTION OF DRAWINGS

FIG. 1 is a sectional view of a cylindrical secondary battery of an example of an embodiment;
FIG. 2 is a view having a part of a wound assembly constituting a cylindrical secondary battery of an example of the embodiment developed;
FIG. 3 is a sectional view taken along the A-A line in a positive electrode plate in FIG. 2;
FIG. 4 is a view having a part of a wound assembly constituting a cylindrical secondary battery of a comparative example developed;
FIG. 5 is a sectional view taken along the B-B line in a positive electrode plate in FIG. 4.
FIG. 6 is a view, corresponding to FIG. 3, of a positive electrode plate of another example of the embodiment;
FIG. 7 is a view, corresponding to FIG. 3, of a positive electrode plate of another example of the embodiment;
FIG. 8 is a view, corresponding to FIG. 3, of a positive electrode plate of another example of the embodiment;
FIG. 9 is a development of a positive electrode plate of another example of the embodiment, schematically showing a change in arrangement position of a positive electrode tab which is a current collecting metal tab;
FIG. 10 shows results of tests conducted for examining an effect obtained with a configuration in FIG. 9;
FIG. 11 is an image diagram showing relationship between a difference in arrangement position of the positive electrode tab inside the secondary battery and a magnitude in effect of improving foil-cutting on a positive electrode core in the embodiment; and
FIG. 12 shows plan views of positive electrode tabs of the embodiment and other examples as viewed through the thickness direction.

### DESCRIPTION OF EMBODIMENTS

Hereafter, embodiments according to the present invention will be described in detail with reference to the accompanying drawings. In the following description, specific shapes, materials, numerical values, orientations, and the like are exemplary illustrations for ease of understanding of the present invention, and can be properly modified to meet the specifications of a cylindrical secondary battery. Moreover, the term "substantially" is hereinafter used to mean the case where things are substantially the same, for example, in addition to the case where things are completely the same. Furthermore, it is originally supposed that, when a plurality of embodiments and modifications are hereafter included, characteristic portions of these are properly combined and used.

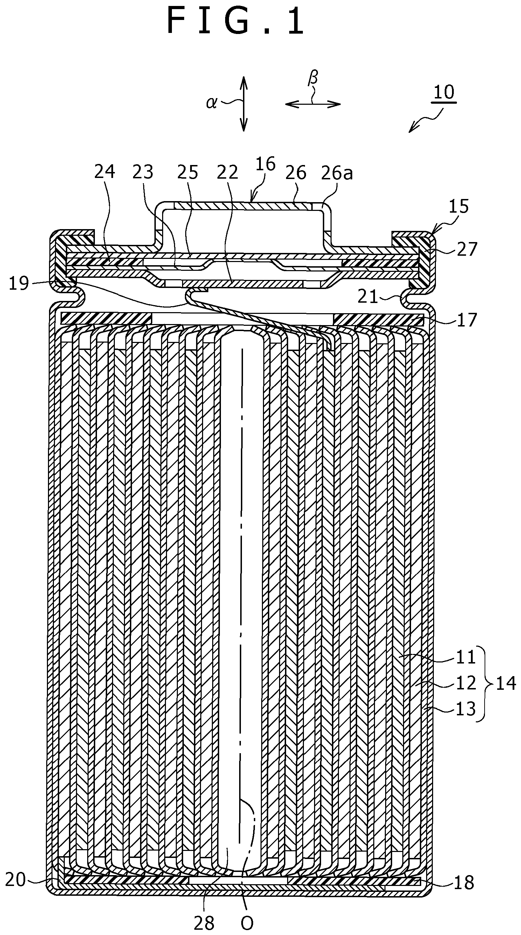

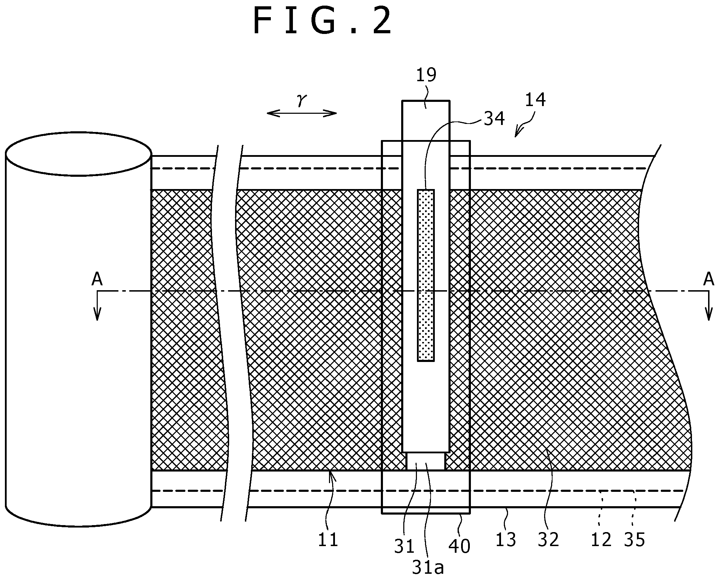

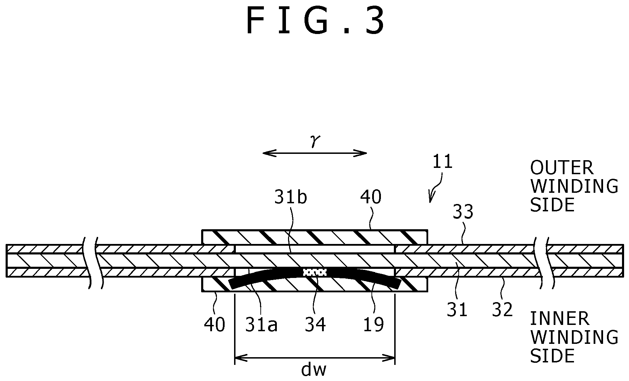

FIG. 1 is a sectional view of a cylindrical secondary battery 10 of an embodiment. FIG. 2 is a view having a part of a wound assembly 14 constituting the cylindrical secondary battery 10 developed. FIG. 3 is a sectional view taken along the A-A line in a positive electrode plate 11 in FIG. 2. As exemplarily shown in FIG. 1, the cylindrical secondary battery 10 comprises the winding-type wound assembly 14, a non-aqueous electrolyte (not shown), a case body 15, and a sealing assembly 16. Hereafter, the "cylindrical secondary battery" is expressed as "secondary battery". The winding-type wound assembly 14 has the positive electrode plate 11, a negative electrode plate 12, and separators 13, and the positive electrode plate 11 and the negative electrode plate 12 are wound into a spiral shape via the separators 13. Each of the positive electrode plate 11 and the negative electrode plate 12 corresponds to an electrode plate. Hereafter, there is occasionally a case where one side of the wound assembly 14 in the axial direction is expressed as being on the "upside" and the other side thereof in the axial direction is expressed as being on the "downside". The non-aqueous electrolyte includes a non-aqueous solvent and an electrolyte salt dissolved in the non-aqueous solvent. The non-aqueous electrolyte is not limited to a liquid electrolyte and may be a solid electrolyte using a gelatinous polymer or the like.

With reference to FIG. 2 and FIG. 3, the positive electrode plate 11 has a belt-shaped positive electrode core 31 and a positive electrode tab 19 joined to the positive electrode core 31. The positive electrode tab 19 corresponds to a current collecting metal tab. The positive electrode tab 19 is a conductive member for electrically connecting the positive electrode core 31 and a positive electrode terminal together and extends to one side of the wound assembly 14 in an axial direction α (upward) from an upper end of the positive electrode core 31. A configuration of connection of the positive electrode tab 19 and the positive electrode plate 11 will be described in detail later.

The positive electrode tab 19 is a belt-shaped conductive member. A structure material of the positive electrode tab is not specially limited. The positive electrode tab 19 is preferably configured of a metal containing aluminum as a main component. Furthermore, in the positive electrode plate 11, positive electrode active material mixture layers 32 and 33 are respectively formed on an inner winding side (inner side in a radial direction β) and an outer winding side (outer side in the radial direction β) of the positive electrode core 31. In FIG. 2, the positive electrode active material mixture layer 32 on the inner winding side is indicated by a slanting lattice portion.

With reference to FIG. 2, the negative electrode plate 12 has a belt-shaped negative electrode core 35 and a negative electrode tab 20 (FIG. 1) joined to the negative electrode core 35. The negative electrode tab 20 is a conductive member for electrically connecting the negative electrode core 35 and a case body 15 mentioned later together and extends to the other side of the wound assembly 14 in the axial direction α (downward) from a lower end of the negative electrode core 35. The case body 15 works as a negative electrode terminal. The negative electrode tab 20 is provided, for example, at a portion on an outer winding side (portion on an outer peripheral surface side) of the wound assembly 14. The negative electrode tab 20 is a belt-shaped conductive member. A structure material of the negative electrode tab is not specially limited. The negative electrode tab is preferably configured of a metal containing nickel or copper as a main component or a metal including both nickel and copper. Negative electrode tabs may be provided at a plurality of positions on the negative electrode core 35. Furthermore, in the negative electrode plate 12, negative electrode active material layers (not shown) are respectively formed on an inner winding side (inner side in the radial direction) and an outer winding side (outer side in the radial direction) of the negative electrode core 35.

Notably, an exposed portion may be formed by exposing the negative electrode core from an outermost peripheral surface of the wound assembly 14, and the exposed portion may be electrically connected to the case body 15 by being brought into contact with an inner surface of a cylindrical portion of the case body 15. In this case, under the electrical connection of the negative electrode plate 12 and the cylindrical portion of the case body 15, further excellent current collectability can be secured.

As mentioned above, the wound assembly 14 has a winding structure configured by winding the positive electrode plate 11 and the negative electrode plate 12 into a spiral shape via the separators 13. Each of the positive electrode plate 11, the negative electrode plate 12, and the separators 13 is formed into a belt shape, and they take a state of being alternately laminated in the radial direction β of the wound assembly 14 by being wound into the spiral shape. In the wound assembly 14, a longitudinal direction of each electrode plate 11, 12 is a winding direction γ (FIG. 2), and a width direction of each electrode plate 11, 12 is the axial direction α (FIG. 1). In the present embodiment, a space 28 is formed in a winding core portion including a winding core of the wound assembly 14. The wound assembly 14 is wound into a spiral shape around a winding center axis O extending through the center of the space 28 in the axial direction. Here, the winding center axis O is a center axis extending, in the axial direction, at the center position of the space 28 in the diameter direction, and is the winding core of the wound assembly 14.

On the outermost peripheral surface of the wound assembly 14, there is pasted a winding stop tape (not shown) across the winding finishing end of the wound assembly 14 in the winding direction of the wound assembly 14 so as to fix the winding finishing end.

Furthermore, the case body 15 and the sealing assembly 16 constitute a metal-made battery case housing the wound assembly 14 and the non-aqueous electrolyte. Insulating plates 17 and 18 are provided on the upside and the downside of the wound assembly 14, respectively. The positive electrode tab 19 extends to the sealing assembly 16 side through a through hole of the upside insulating plate 17 and is welded to a lower surface of a filter 22 as a bottom plate of the sealing assembly 16. In the cylindrical secondary battery 10, there works, as a positive electrode terminal, a cap 26 which is electrically connected to the filter 22 and is a top plate of the sealing assembly 16.

The case body 15 has a bottomed cylindrical shape having an opening and is, for example, a bottomed cylindrical metal-made container. A gasket 27 is provided between the case body 15 and the sealing assembly 16, and sealability of the interior of the battery case is secured. The case body 15 has a projecting portion 21 which supports the sealing assembly 16 and is formed, for example, by pressing a side wall from the outside. The projecting portion 21 is preferably formed into an annular shape along the circumferential direction of the case body 15, and supports the sealing assembly 16 on its upper surface. The sealing assembly 16 seals the opening of the case body 15.

The sealing assembly 16 has the filter 22, a lower valve member 23, an insulating member 24, an upper valve member 25, and the cap 26 laminated in the order from the wound assembly 14 side. Each of the members constituting the sealing assembly 16 has a disc shape or a ring shape, for example, and the members except the insulating member 24 are electrically connected to one another. The lower valve member 23 and the upper valve member 25 are connected to each other at their center portions, and the insulating member 24 is interposed between their peripheral edges. When abnormal heat generation causes an internal pressure of the battery to rise, the lower valve member 23 by way of example ruptures, thereby, the upper valve member 25 expands to the cap 26 side and separates from the lower valve member 23, and thereby, the electrical connection of both of them is interrupted. When the internal pressure further rises, the upper valve member 25 ruptures, and gas is discharged from an opening 26a of the cap 26.

Hereafter, using FIG. 2 and FIG. 3, the constituents of the wound assembly 14, in particular, the positive electrode plate 11 and the positive electrode tab 19, are described in detail. For the positive electrode core 31 of the positive electrode plate 11, there is used foil of a metal such, for example, as aluminum, a film having the metal disposed on the surface layers, or the like. The positive electrode core 31 is preferably foil of a metal containing aluminum or aluminum alloy as a main component. A thickness of the positive electrode core 31 is, for example, greater than or equal to 10 µm and less than or equal to 30 µm.

The positive electrode active material mixture layers 32 and 33 preferably include a positive electrode active material, a conductive agent, and a binder agent. The positive electrode plate 11 is produced by applying positive electrode mixture slurry including the positive electrode active material, the conductive agent, the binder agent, and a solvent such as N-methyl-2-pyrrolidone (NMP) on both surfaces of the positive electrode core 31, and after that, drying and rolling it.

Examples of the positive electrode active material can include lithium-containing transition metal oxides containing transition metal element(s) such as Co, Mn, and Ni. Such a lithium-containing transition metal oxide is not specially limited and is preferably a composite oxide expressed as the general formula Li₁₊ₓMO₂ (in the formula, -0.2<x≤0.2, and M includes at least one of the group consisting of Ni, Co, Mn, and Al).

Examples of the aforementioned conductive agent include carbon materials such as carbon black (CB), acetylene black (AB), Ketjen black, and graphite, and the like. Examples of the aforementioned binder agent include fluorine-based resins such as polytetrafluoroethylene (PTFE) and polyvinylidene fluoride (PVdF), polyacrylonitrile (PAN), polyimide (PI), acrylic resins, polyolefin-based resins, and the like. Moreover, carboxymethylcellulose (CMC) or its salt, polyethylene oxide (PEO), or the like may be used along with those resins. One of these may be solely used or two or more of these may be combined and used.

On the inner winding side shown in FIG. 2 and FIG. 3 and the outer winding side shown in FIG. 3 in the positive electrode plate 11, there are respectively provided core exposed portions 31a and 31b that surfaces of the metal constituting the positive electrode core 31 are exposed from, substantially at the center of the length of the positive electrode plate 11 in the winding direction (γ-direction). Each of the core exposed portions 31a and 3 1b is a portion that is formed into a rectangular shape across the width-directional total length of the positive electrode core 31 and in which a surface of the positive electrode core 31 is not covered by the positive electrode active material mixture layer. The two core exposed portions 31a and 31b are formed at the same positions in the winding direction γ of the positive electrode core 31. Widths dw (FIG. 3) of the core exposed portions 31a and 31b along the winding direction γ are the same as each other.

The positive electrode tab 19 is arranged in the core exposed portion 31a on the inner winding side of the positive electrode core 31 and is joined and electrically connected to the positive electrode core 31 by welding such as ultrasonic welding. The positive electrode tab 19 has a long strip-shaped rectangular plate shape. Therefore, shapes of both ends of the positive electrode tab 19 in the width direction have linear shapes parallel to each other as the positive electrode tab 19 is viewed through the thickness direction. A length of the positive electrode tab 19 in the width direction is larger than the width dw of the core exposed portion 31a, the width direction corresponding to the winding direction γ before the joining to the positive electrode core 31.

As shown in FIG. 3, the positive electrode tab 19 is curved such that, at least at its longitudinal directional end that faces the positive electrode plate 11, its width-directional center is convex toward the core exposed portion 31a. Further, the positive electrode tab 19 is welded to the positive electrode core 31 in the state where the width-directional center portion of the positive electrode tab 19 is in contact with a surface of the positive electrode core 31 on the inner winding side. In FIG. 2 and FIG. 3, there is indicated by a sand texture portion a molten and solidified portion 34 in the welding of the positive electrode tab 19.

In this state, both ends of the positive electrode tab 19 in the width direction ride ends of the positive electrode active material mixture layer 32 provided on the surface of the positive electrode core 31 on the inner winding side. Thereby, the positive electrode active material mixture layer 32 is interposed between both ends of the positive electrode tab 19 in the width direction and the positive electrode core 31, and both ends of the positive electrode tab 19 in the width direction are not in contact with the positive electrode core 31. Thereby, as mentioned later, foil-cutting on the positive electrode core 31 can be restrained regardless of charge-discharge repetition of the secondary battery 10.

Moreover, an insulating tape 40 is pasted on the surface of the positive electrode tab 19 on the opposite side to the positive electrode core 31 side and on portions of the positive electrode active material mixture layer 32 that are positioned on both sides of the core exposed portion 31a in the winding direction γ. The insulating tape 40 covers the longitudinal directional end of the positive electrode tab 19 on the positive electrode core 31 side and covers the core exposed portion 31a. The insulating tape 40 is provided for protecting the positive electrode tab 19 and the core exposed portion 31a. For example, the insulating tape 40 prevents a foreign object having conductivity from attaching to the positive electrode tab 19 to cause short circuit in the wound assembly 14. An insulating tape 40 is also pasted on portions of the positive electrode active material mixture layer 33 that are positioned on both sides of the core exposed portion 3 1b in the winding direction γ, the positive electrode active material mixture layer 33 being on the outer winding side of the positive electrode core 31.

Each insulating tape 40 is made of an insulating material such, for example, as a PI tape. The PI tape is obtained by forming a pressure-sensitive adhesive layer on one surface of a base material layer such as polyimide (PI). For the base material layer of the insulating tape 40, there can also be used polypropylene (PP), polyethylene terephthalate (PET), and the like.

As shown in FIG. 2, the negative electrode plate 12 has the negative electrode core 35 and negative electrode active material mixture layers (not shown) formed on the negative electrode core 35. For the negative electrode core 35, there is used foil of a metal such, for example, as copper, a film having the metal disposed on the surface layers, or the like. A thickness of the negative electrode core 35 is, for example, greater than or equal to 5 µm and less than or equal to 30 µm.

The negative electrode active material mixture layers preferably include a negative electrode active material and a binder agent. The negative electrode plate 12 is produced, for example, by applying negative electrode mixture slurry including the negative electrode active material, the binder agent, water, and the like on both surfaces of the negative electrode core 35, and after that, drying and rolling it.

The negative electrode active material is not specially limited as long as it can reversibly store and release lithium ions, and for it, there can be used, for example, carbon materials such as natural graphite and artificial graphite, metals, such as Si and Sn, alloyed with lithium or alloys and composite oxides including these, and the like. For the binder agent included in the negative electrode active material layers, there can be used, for example, the similar resins to those in the case of the positive electrode plate 11. When the negative electrode mixture slurry is prepared with an aqueous solvent, there can be used styrene-butadiene rubber (SBR), CMC or its salt, polyacrylic acid or its salt, polyvinyl alcohol, and the like. A single kind of these may be solely used or two or more kinds of these may be combined and used.

For the separators 13 (FIG. 1 and FIG. 2), a porous sheet having ion permeability and insulation ability is used. Specific examples of the porous sheet include microporous thin films, woven fabric, nonwoven fabric, and the like. As a material of the separators 13, there are preferably employed olefin resins such as polyethylene and polypropylene. A thickness of the separators 13 is greater than or equal to 10 µm and less than or equal to 50 µm, for example. The separators 13 have a melting point greater than or equal to about 130°C and less than or equal to about 180°C, for example.

According to the aforementioned secondary battery 10, the positive electrode active material mixture layer 32 is interposed between both ends of the positive electrode tab 19 in the width direction and the positive electrode core 31. Thereby, even when expansion and contraction of the electrode plates 11 and 12 are repeated due to charge-discharge repetition of the secondary battery 10 and a surface pressure exerted on the electrode plates 11 and 12 tends to rise, there can be restrained a pressure that the positive electrode core 31 receives from both ends of the positive electrode tab 19 in the width direction. Therefore, foil-cutting on the positive electrode core 31 can be restrained regardless of charge-discharge repetition of the secondary battery 10.

In the present embodiment, the positive electrode active material mixture layer 32 is interposed between both ends of the positive electrode tab 19 in the width direction and the positive electrode core 31. In a portion where the positive electrode tab 19 faces the positive electrode plate 11, the positive electrode active material mixture layer 32 is not necessarily interposed over the total length of the positive electrode tab 19 between both ends thereof in the width direction and the positive electrode core 31. While the positive electrode active material mixture layer 32 is preferably interposed between at least part of each of both ends of the positive electrode tab 19 in the width direction and the positive electrode core 31, the positive electrode active material mixture layer 32 may be interposed between at least part of one end (width-directional end) of both ends of the positive electrode tab 19 in the width direction and the positive electrode core 31. Moreover, while the end of the positive electrode tab 19 in the width direction may be in contact with the positive electrode active material mixture layer 32, it may be separate from the positive electrode active material mixture layer 32, not in contact with the positive electrode active material mixture layer 32.

While the positive electrode tab 19 is joined and electrically connected to the core exposed portion 31a by welding, there may be employed the electrical contact by way of example only by being in contact with the core exposed portion 31a, other than by welding.

Moreover, in the present embodiment, since there can be made small the width dw of the core exposed portion 31a, which is a distance between the positive electrode active material mixture layers 32 on both sides of the core exposed portion 31a of the positive electrode core 31, there can be made small the width of the insulating tape 40 for protecting the welded region of the core exposed portion 31a and the positive electrode tab 19. Thereby, since a cost for the insulating tape 40 can be reduced and the area of the positive electrode active material mixture layer 32 can be increased, battery performance is also improved.

Moreover, in the present embodiment, the current collecting metal tab in the case where the active material mixture layer is interposed between at least part of the width-directional end of the current collecting metal tab and the core is the positive electrode tab 19 electrically connected to the positive electrode core 31. The positive electrode core 31 is often foil of a metal containing aluminum alloy as its main component, and is softer and is more readily cut than in the case of the negative electrode plate 12 which is often formed of foil of a metal such as copper or a film having the metal disposed on its surface layers. The configuration of the present disclosure accordingly makes the effect of being able to restrain core foil-cutting significant.

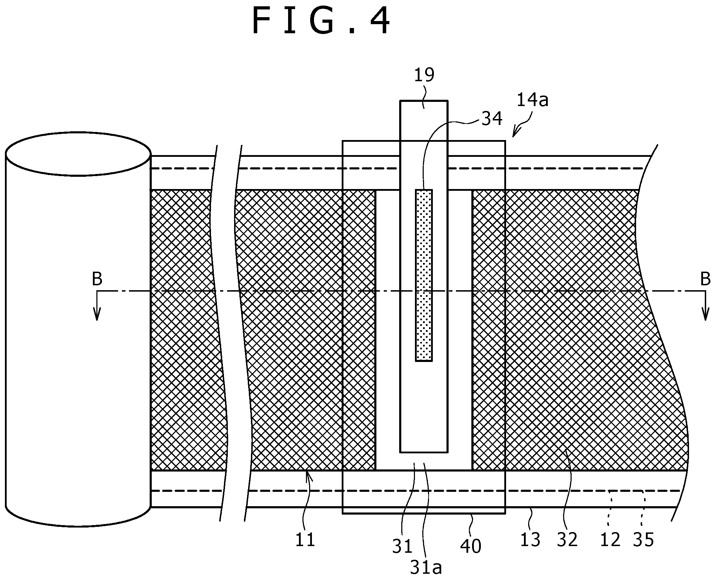

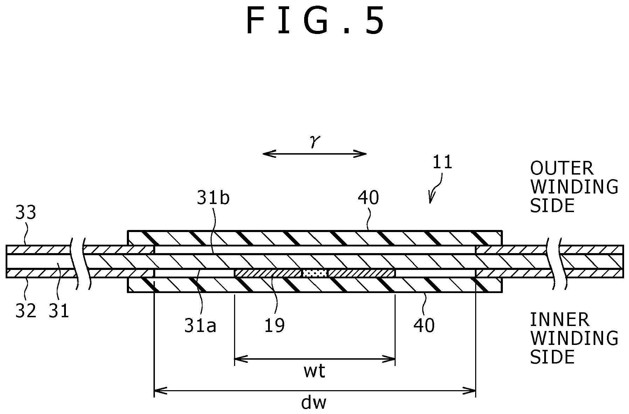

In FIG. 4, there is developed and shown a part of a wound assembly 14a constituting a secondary battery of a comparative example. FIG. 5 is a sectional view taken along the B-B line in the positive electrode plate 11 in FIG. 4. Unlike the embodiment in FIG. 1 to FIG. 3, in the comparative example, a width Wt of the positive electrode tab 19 is smaller than the width dw of the core exposed portion 31a. At the longitudinal directional end on the positive electrode core 31 side, the whole surface of the positive electrode tab 19 on the positive electrode plate 11 side is arranged in the core exposed portion 31a of the positive electrode core 31 on the inner winding side, and the positive electrode tab 19 is joined to the positive electrode core 31 by welding. Accordingly, the positive electrode active material mixture layer 32 is not interposed between any of both ends of the positive electrode tab 19 in the width direction and the positive electrode core 31.

In such a comparative example, under repetition of expansion and contraction of the electrode plates 11 and 12 in charge-discharge cycles of the secondary battery that includes the wound assembly 14a, a surface pressure exerted on the electrode places 11 and 12 rises, which causes a possibility that a pressure that the positive electrode core 31 receives from both ends of the positive electrode tab 19 in the width direction is increased. This situation causes a possibility that foil-cutting on the positive electrode core 31 to occur. According to the embodiment in FIG. 1 to FIG. 3, this foil-cutting can be restrained from occurring.

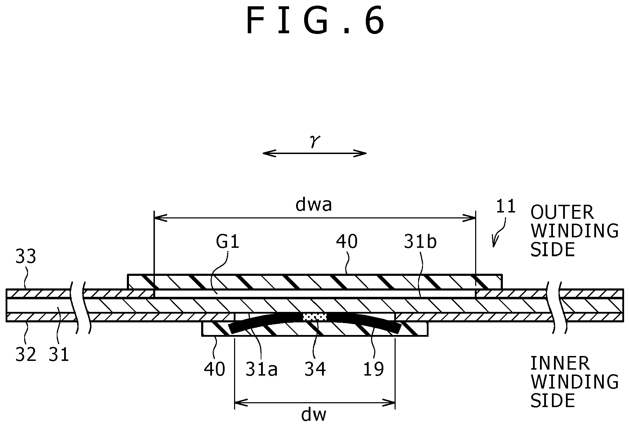

FIG. 6 is a view, corresponding to FIG. 3, of the positive electrode plate 11 of another example of the embodiment. In the configuration of the present example, a width dwa of the core exposed portion 3 1b along the winding direction γ on the outer winding side of the positive electrode plate 11 is larger than the width dw of the core exposed portion 31a along the winding direction γ on the inner winding side thereof. The center positions of the two core exposed portions 31a and 31b in the winding direction γ coincide with each other.

According to the configuration of the present example, there can be more restrained the pressure that the positive electrode plate 11 receives from both ends of the positive electrode tab 19 in the width direction due to charge and discharge of the secondary battery. Namely, on the outer winding side of the positive electrode plate 11, there is provided a gap G1 corresponding to the thickness of the positive electrode active material mixture layer 33 at portions on the opposite side to both ends of the positive electrode tab 19 in the width direction relative to the positive electrode core 31, and thereby, there can be dispersed the pressure that the positive electrode core 31 receives from both ends of the positive electrode tab 19 in the width direction. Thereby, there can be obtained a secondary battery capable of further restraining foil-cutting on the positive electrode core 31. The other configuration and operation of the present example are similar to the configuration in FIG. 1 to FIG. 3.

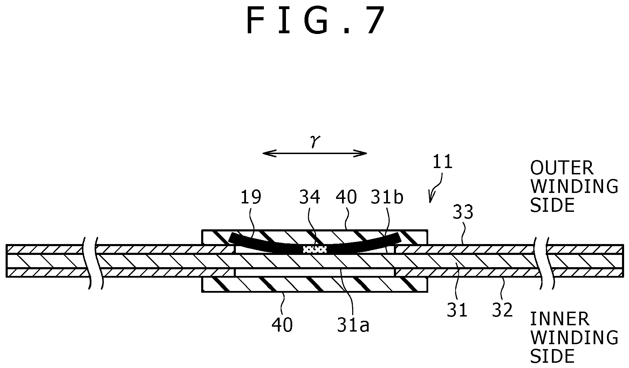

FIG. 7 is a view, corresponding to FIG. 3, of the positive electrode plate 11 of another example of the embodiment. In the configuration of the present example, in place of the core exposed portion 31a of the positive electrode core 31 on the inner winding side in the configuration in FIG. 1 to FIG. 3, the positive electrode tab 19 is arranged in the core exposed portion 31a thereof on the outer winding side and is joined and electrically connected to the positive electrode core 31 by welding.

The positive electrode tab 19 is welded to the positive electrode core 31 in the state where its width-directional center portion is in contact with the surface of the positive electrode core 31 on the outer winding side. In this state, both ends of the positive electrode tab 19 in the width direction ride ends of the positive electrode active material mixture layer 33 provided on the outer winding side of the positive electrode core 31. Thereby, the positive electrode active material mixture layer 33 is interposed between at least part of both ends of the positive electrode tab 19 in the width direction and the positive electrode core 31, and both ends of the positive electrode tab 19 in the width direction are not in contact with the positive electrode core 31.

Also according to the configuration of the present example, foil-cutting on the positive electrode core 31 can be restrained regardless of charge-discharge repetition of the secondary battery. In addition, in the configuration of the present example, the positive electrode tab 19 is arranged on the outer winding side of the positive electrode core 31 bent to the inner periphery side in the state of the wound assembly. This makes the pressure that the positive electrode plate 11 receives from both ends of the positive electrode tab 19 in the width direction smaller than in the case where the positive electrode tab 19 is arranged on the inner winding side of the positive electrode core 31. Thereby, foil-cutting on the positive electrode core 31 can be further restrained. The other configuration and operation of the present example are similar to the configuration in FIG. 1 to FIG. 3.

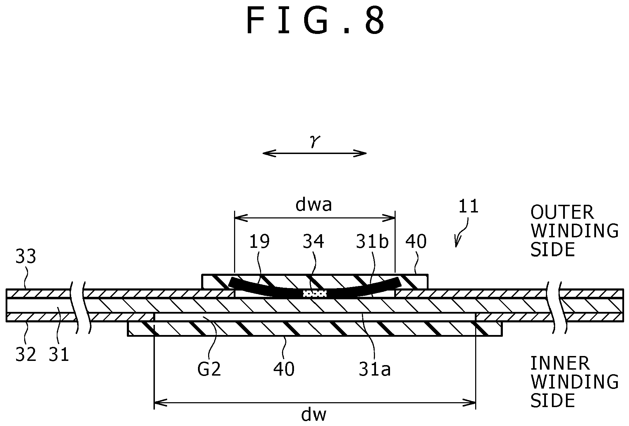

FIG. 8 is a view, corresponding to FIG. 3, of the positive electrode plate 11 of another example of the embodiment. In the configuration of the present example, the width dw of the core exposed portion 31a along the winding direction γ on the inner winding side of the positive electrode plate 11 in the configuration in FIG. 7 is larger than the width dwa of the core exposed portion 3 1b along the winding direction γ on the outer winding side thereof. The center positions of the two core exposed portions 31a and 31b in the winding direction coincide with each other.

According to the configuration of the present example, there can be restrained the pressure that the positive electrode plate 11 receives from the width-directional end of the positive electrode tab 19 due to charge and discharge of the secondary battery. Namely, on the inner winding side of the positive electrode plate 11, there is provided a gap G2 corresponding to the thickness of the positive electrode active material mixture layer 32 at portions on the opposite side to both ends of the positive electrode tab 19 in the width direction relative to the positive electrode core 31, and thereby, there can be dispersed the pressure that the positive electrode core 31 receives from both ends of the positive electrode tab 19 in the width direction. Thereby, there can be obtained a secondary battery capable of further restraining foil-cutting on the positive electrode core 31. The other configuration and operation of the present example are similar to the configuration in FIG. 1 to FIG. 3, the configuration in FIG. 6, or the configuration in FIG. 7.

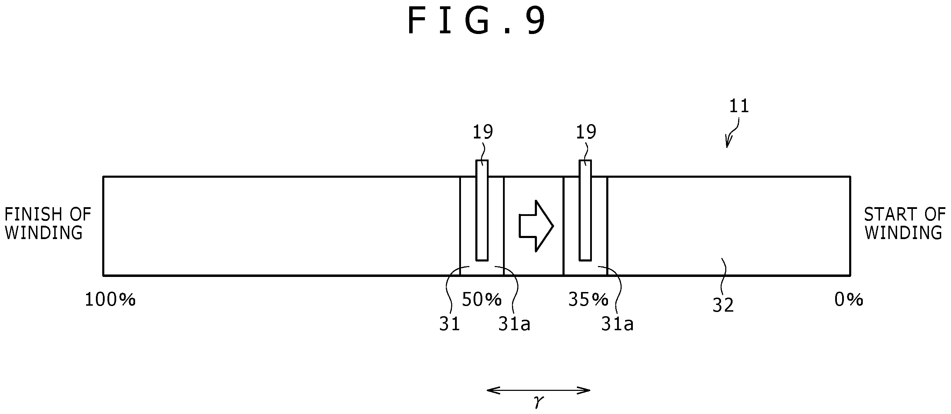

FIG. 9 is a development of the positive electrode plate 11 of another example of the embodiment, schematically showing a change in arrangement position of the positive electrode tab 19. As shown in FIG. 9, in the configuration of the present example, on the inner winding side of the positive electrode plate 11, the arrangement position of the positive electrode tab 19 is changed from the center of the positive electrode core 31 in the winding direction γ to a position moved to the winding starting side of the positive electrode core 31. In FIG. 9, 50% and 35% as ratios shown below the positive electrode tab 19 indicate ratios of the length from the winding starting end to the position of the positive electrode tab 19 relative to the total length of the positive electrode plate 11 along the winding direction γ. Therefore, they are 0% at the winding starting end of the positive electrode plate 11 and 100% at the winding finishing end thereof. The arrangement position of the positive electrode tab 19 is not limited to the position of 35% in ratio of the length from the start of winding to the positive electrode tab and can take a position from 0% to 50%.

According to the configuration of the present example, there is made far the distance to the positive electrode tab 19 from the inner peripheral surface of the case body 15 (FIG. 1) having high rigidity. Thereby, since there can be made small the surface pressure exerted on the positive electrode tab 19 when the wound assembly expands during charge and discharge of the secondary battery, foil-cutting on the positive electrode core 31 can be further restrained. The other configuration and operation of the present example are similar to the configuration in FIG. 1 to FIG. 3. Notably, the configuration of the present example may be combined with the configuration in FIG. 7 in which the positive electrode tab 19 is arranged on the outer winding side of the positive electrode core.

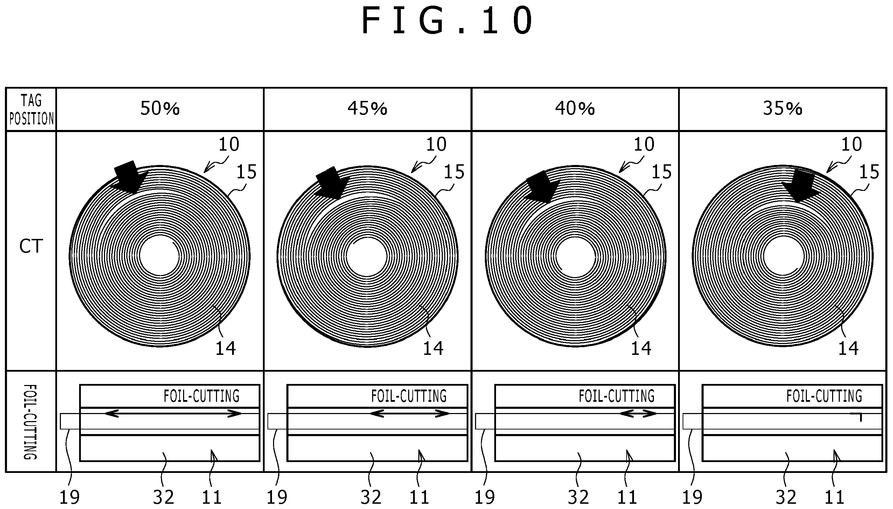

FIG. 10 shows the results of experiments conducted for examining the effect obtained with the configuration in FIG. 9. In the experiments, the configuration similar to that of the comparative example shown in FIG. 4 and FIG. 5 was set to a configuration of a tab position of 50%, and the configurations, from this configuration, changed in arrangement position of the positive electrode tab 19 toward the winding starting end of the positive electrode plate 11 were set to configurations of a tab position of 45%, a tab position of 40%, and a tab position of 35%. Herein, as in the configuration shown in FIG. 9, the ratio of the tab position means the ratio of the length from the winding starting end to the position of the positive electrode tab 19 relative to the total length of the positive electrode plate along the winding direction γ. Then, after the same charge and discharge were repeated with the secondary batteries 10 having the configurations of the four tab positions, each secondary battery 10 was taken apart to examine the state of foil-cutting near the positive electrode tab 19 of the positive electrode core 31.

The field of CT in the table of FIG. 10 schematically shows pictures of X-ray computed tomography images (X-ray CT images) of the secondary batteries 10. In the field of CT, each positive electrode tab is arranged inside an arc-shaped space at the tip of a bold arrow. The field of foil-cutting in FIG. 10 schematically shows portions including the arrangement positions of the positive electrode tabs 19 of the positive electrode plates 11. The length of each arrow at foil-cutting indicates the occurrence position of foil-cutting and the length thereof. Moreover, the L shape at foil-cutting indicates the shape of foil-cutting and the size thereof.

It is found from the experiment results in FIG. 10 that as the arrangement position of the positive electrode tab 19 comes closer to winding starting end of the positive electrode plate 11 along the winding direction, foil-cutting becomes smaller. It is inferred from this that also in the configuration of FIG. 9, the arrangement position of the positive electrode tab 19 coming closer to the winding starting end from the tab position of 50% can make foil-cutting smaller.

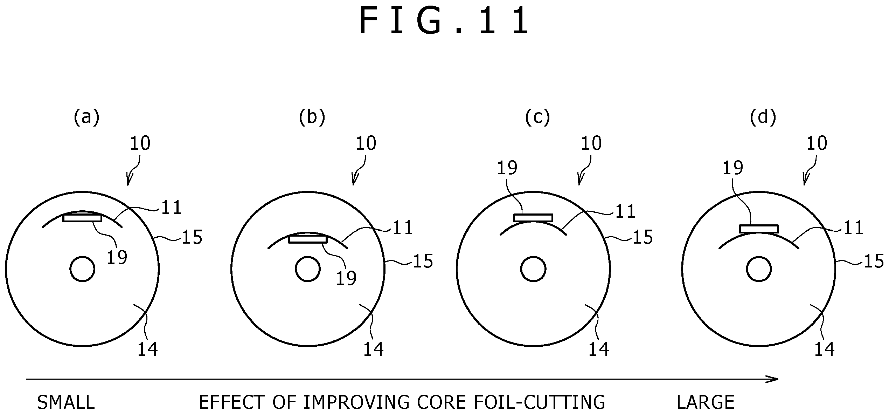

FIG. 11 is an image diagram showing relationship between a difference in arrangement position of the positive electrode tab 19 inside the secondary battery 10 and a magnitude in effect of improving foil-cutting on the positive electrode core in the embodiment. Each of FIGS. 11(a) to 11(d) schematically shows positional relation between a part of the positive electrode plate 11 inside the wound assembly 14, and the positive electrode tab 19 joined to the part. In FIG. 11(a), as with the configuration of FIG. 1 to FIG. 3, the positive electrode tab 19 is arranged on the inner winding side of the positive electrode plate 11. In FIG. 11(b), the arrangement position of the positive electrode tab 19 is changed more on the winding starting end side of the positive electrode plate 11 than in FIG. 11(a). In FIG. 11(c), there is similar to that in FIG. 11(a) the position of the positive electrode tab 19 in the winding direction of the positive electrode plate 11, and the positive electrode tab 19 is arranged on the outer winding side of the positive electrode plate 11. In FIG. 11(d), while there is similar to that in FIG. 11(b) the position of the positive electrode tab 19 in the winding direction of the positive electrode plate 11, the positive electrode tab 19 is arranged on the outer winding side of the positive electrode plate 11.

It was found, from the results of experiments conducted by the inventors, and the like, that the effect of improving core foil-cutting was able to be made larger from FIG. 11(a) toward FIG. 11(d) as indicated by the orientation of the arrow in the lower part of FIG. 11.

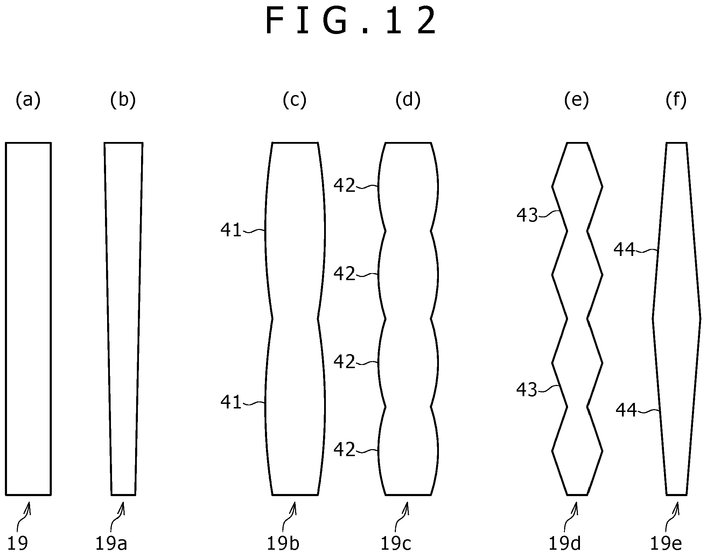

FIG. 12 shows plan views of positive electrode tabs of the embodiment and other examples as viewed through the thickness direction. FIG. 12(a) is a plan view of the positive electrode tab 19 of the embodiment, and FIGS. 12(b) to 12(f) are plan views of positive electrode tabs 19a to 19e of the other examples. As shown in FIGS. 12(a) and 12(b), any of both ends of the positive electrode tab 19, 19a in the width direction has a linear shape, and as shown in FIG. 12(b), both ends of the positive electrode tab 19a in the width direction are inclined relative to the longitudinal direction so as to come gradually close to each other toward one side in the longitudinal direction (downside in FIG. 12(b)).

FIGS. 12(c) and 12 (d) are plan views of the positive electrode tabs 19b and 19c, respectively, and any of both ends of the positive electrode tab 19b, 19c in the width direction has a curved shape. Both ends of the positive electrode tabs 19c and 19d in the width direction have shapes each having two arcs 41 connected and shapes each having four arcs 42 connected.

FIGS. 12(e) and 12(f) are plan views of the positive electrode tabs 19d and 19e, respectively, and any of both ends of the positive electrode tab 19d, 19e in the width direction has a shape having a plurality of straight lines 43, 44 combined. Each of both ends of the positive electrode tab 19d in the width direction has a zigzag shape having four corners. Each of both ends of the positive electrode tab 19e in the width direction has a mountain shape having two straight lines 44 combined.

When the positive electrode tabs 19 and 19a to 19e shown in FIGS. 12(a) to 12(f) are used, parts of both ends of the positive electrode tabs 19 and 19a to 19e in the width direction largely protrude outward in the width direction, and there can be employed configurations in which only the protruding parts ride the positive electrode active material mixture layers on both sides of the positive electrode tabs 19 and 19a to 19e in the winding direction. In these cases, the positive electrode active material mixture layers are interposed between parts of both ends of the positive electrode tabs 19 and 19a to 19e in the width direction and the positive electrode cores. Also with the configurations of the other examples as above, foil-cutting on the positive electrode core can be restrained.

Furthermore, as shown in FIGS. 12(a) to 12(d), being different from the positive electrode tabs 19d and 19e, the positive electrode tabs 19 and 19a to 19c do not have sharp corner portions at both ends in the width direction. Thereby, even when the surface pressure exerted on the positive electrode tabs 19 and 19a to 19e and the positive electrode plate becomes large depending on the state of the wound assembly, foil-cutting on the positive electrode core can be further restrained.

Next, there are described totally three secondary batteries of Examples 1 to 2 and Comparative Example 1 used in experiments for examining an effect of restraining foil-cutting by the inventors of the present disclosure.

### EXAMPLE 1

### [Example 1]

### [Production of Positive Electrode Plate]

Predetermined known paste-like positive electrode mixture slurry was applied on both surfaces of a long strip-shaped positive electrode core composed of aluminum foil and dried by a drying machine, after that, cut into a predetermined electrode size, and rolled using a roller to produce the positive electrode plate 11 having the positive electrode active material mixture layers formed on both surface of the positive electrode core. Moreover, there were formed core exposed portions in which the active material was not formed at center portions of the positive electrode plate 11 in the length direction, and the aluminum-made positive electrode tab 19 was fixed to the core exposed portion on the inner winding side by ultrasonic welding. The positive electrode tab 19 has 5.0 mm of width, 68.0 mm of length, and 0.10 mm of thickness. Both ends of the positive electrode tab 19 in the width direction were arranged so as to ride the positive electrode active material mixture layer on the foil portion of the positive electrode core. The positive electrode plate 11 has 58.0 mm of width, 938.0 mm of length, and 0.10 mm of thickness.

### [Production of Negative Electrode Plate]

Predetermined known negative electrode mixture slurry was applied on both surfaces of a negative electrode core composed of copper foil and dried by a drying machine, and compressed into a predetermined thickness by a roller of a roll press machine. Then, after the long strip-shaped negative electrode core having negative electrode active material layers formed was cut into a predetermined electrode size, there was attached a negative electrode tab composed of a copper-nickel cladding material. In this stage, at one end of the negative electrode core in the winding direction, there were formed core exposed portions in which the active material was not formed on any of both surfaces, and the negative electrode tab was fixed to the core exposed portion by ultrasonic welding. At the other end of the negative electrode core, there were formed core exposed portions in which the active material was not formed on any of both surfaces, a negative electrode tab was also fixed to the core exposed portion by ultrasonic welding. The one negative electrode tab has 3.0 mm of width, 52.0 mm of length, and 0.10 mm of thickness, and the other negative electrode tab has 3.0 mm of width, 61.0 mm of length, and 0.10 mm of thickness. The negative electrode plate has 59.0 mm of width, 1040.0 mm of length, and 0.10 mm of thickness. The negative electrode plate 12 was produced as above.

### [Production of Wound Assembly]

By winding the produced positive electrode plate 11 and negative electrode plate 12 into a spiral shape via the separators 13, a winding-type wound assembly was produced. The separators 13 have 62.0 mm of width, 1114.0 mm and 1134.0 mm of lengths, and 0.014 mm of thickness.

### [Production of Secondary Battery]

The aforementioned wound assembly was housed in the bottomed cylindrical case body 15 of 18 mm of outer diameter and 65 mm of height, the insulating plates 17 and 18 were arranged on the upside and downside of the wound assembly, respectively, and a non-aqueous electrolyte solution was injected to the inside of the case body 15. After that, the end of the opening of the case body 15 was sealed with the gasket 27 and the sealing assembly 16 to produce a cylindrical lithium ion secondary battery in 18650 size. After the production, the secondary battery underwent charge-discharge inspection.

### [Comparative Example 1]

For Comparative Example 1, in the state of both ends of the positive electrode tab in the width direction being in direct contact with the core exposed portion on the inner winding side of the positive electrode core, the positive electrode tab was ultrasonic-welded to the positive electrode core. The other configuration of the Comparative Example 1 is similar to that of Example 1.

The produced secondary batteries of Example 1 and Comparative Example 1 were charged to 4.2 V, and after that, discharged to 2.5 V. After charge and discharge, the wound assembly was taken out from the case body of each secondary battery to examine the presence or absence of foil-cutting on the positive electrode core near the joint portion of the positive electrode tab and the positive electrode core. Table 1 below presents the results. Experiments were performed for three test articles of each of Example 1 and Comparative Example 1. Moreover, before the charge and discharge, no foil-cutting on the positive electrode core was confirmed for each test article.

**[Table 1]**

| | Before Charge and Discharge (Rate of Core Foil-Cutting) | After Charge and Discharge (Rate of Core Foil-Cutting) |
|---|---|---|
| Comparative Example 1 | 0/3 | 3/3 |
| Example 1 | 0/3 | 0/3 |

It was found from the experiment results presented in Table 1 that, while in Comparative Example 1, core foil-cutting occurred for all the test articles after charge and discharge, in Example 1, no core foil-cutting was able to be confirmed for any of the test articles after charge and discharge. It was accordingly able to be confirmed that according to the configuration of the present disclosure, there was obtained a secondary battery capable of restraining foil-cutting on a positive electrode core near both ends of a positive electrode tab in the width direction regardless of charge-discharge repetition.

### [Example 2]

As with the configuration shown in FIG. 7, in Example 2, the positive electrode tab was ultrasonic-welded to the core exposed portion of the positive electrode core on the outer winding side. The other configuration of Example 2 is similar to that of Example 1.

The produced secondary batteries of Example 2 and the aforementioned Comparative Example 1 were charged to 4.2 V, and after that, discharged to 2.5 V. After charge and discharge, the wound assembly was taken out from the case body of each battery to examine the presence or absence of foil-cutting on the positive electrode core near the joint portion of the positive electrode tab and the positive electrode core. Table 2 below presents the results. Experiments were performed for two test articles of each of Example 2 and Comparative Example 1. Moreover, before the charge and discharge, no core foil-cutting was confirmed for each test article.

**[Table 2]**

| | Before Charge and Discharge (Rate of Core Foil-Cutting) | After Charge and Discharge (Rate of Core Foil-Cutting) |
|---|---|---|
| Comparative Example 1 | 0/2 | 2/2 |
| Example 2 | 0/2 | 0/2 |

It was found from the experiment results presented in Table 2 that, while in Comparative Example 1, core foil-cutting occurred for all the test articles after charge and discharge, in Example 2, no core foil-cutting was confirmed for any of all the test articles. It was accordingly able to be confirmed that according to the configuration of the present disclosure, there was obtained a secondary battery capable of further restraining foil-cutting on the positive electrode core near both ends of the positive electrode tab in the width direction by arranging the positive electrode tab on the outer winding side of the positive electrode core.

While in the aforementioned embodiment, there have been described cases where the configuration of the present disclosure is applied to the configuration of connecting the positive electrode tab to the positive electrode plate, the configuration of the present disclosure may be applied to a configuration of connecting the negative electrode tab to the negative electrode plate. Namely, there may be employed a configuration in which the negative electrode active material mixture layer is interposed between at least part of a width-directional end of the negative electrode tab and the negative electrode core.

### REFERENCE SIGNS LIST

10 cylindrical secondary battery (secondary battery), 11 positive electrode plate, 12 negative electrode plate, 13 separator, 14, 14a wound assembly, 15 case body, 16 sealing assembly, 17, 18 insulating plate, 19, 19a to 19e positive electrode tab, 21 projecting portion, 22 filter, 23 lower valve member, 24 insulating member, 25 upper valve member, 26 cap, 27 gasket, 28 space, 31 positive electrode core, 31a, 31b core exposed portion, 32, 33 positive electrode active material mixture layer, 34 molten and solidified portion, 35 negative electrode core, 40 insulating tape, 41, 42 arc, 43, 44 straight line

## Claims

1. A cylindrical secondary battery, comprising:
a wound assembly obtained by winding an electrode plate having a belt-shaped core and active material mixture layers formed on both surfaces of the core, a current collecting metal tab being arranged in an exposed portion that the core is exposed from, the current collecting metal tab being electrically connected to the core, wherein
the active material mixture layer is interposed between at least part of a width-directional end of the current collecting metal tab and the core.

2. The cylindrical secondary battery according to claim 1, wherein a shape of the width-directional end of the current collecting metal tab is a linear shape or a curved shape as the current collecting metal tab is viewed through a thickness direction.

3. The cylindrical secondary battery according to claim 1 or 2, wherein the current collecting metal tab is welded to the core.

4. The cylindrical secondary battery according to any one of claims 1 to 3, wherein the current collecting metal tab is arranged on an outer winding side of the electrode plate.

5. The cylindrical secondary battery according to any one of claims 1 to 4, wherein the electrode plate is a positive electrode plate.
